(19) **Europäisches Patentamt**
**European Patent Office**
**Office européen des brevets**

(11) **EP 4 574 516 A1**

(12) **EUROPEAN PATENT APPLICATION**

(43) Date of publication:
**25.06.2025  Bulletin 2025/26**

(21) Application number: **23217476.3**

(22) Date of filing: **18.12.2023**

(51) International Patent Classification (IPC):
**B60L 1/02** $^{(2006.01)}$   **B60L 15/02** $^{(2006.01)}$
**B60L 15/20** $^{(2006.01)}$

(52) Cooperative Patent Classification (CPC):
**B60L 1/02; B60L 15/025; B60L 15/20;**
B60L 2200/36; B60L 2200/40; B60L 2220/54;
B60L 2240/421; B60L 2240/423; B60L 2240/425;
B60L 2240/429

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **VOLVO TRUCK CORPORATION
405 08 Göteborg (SE)**

(72) Inventors:
• **HALL, Sebastian
  413 17 GÖTEBORG (SE)**
• **GILLSTRÖM, Andreas
  421 34 VÄSTRA FRÖLUNDA (SE)**

(74) Representative: **Ström & Gulliksson AB**
**P.O. Box 4188**
**203 13 Malmö (SE)**

(54) **ELECTRICAL HEATING SYSTEM**

(57)     A computer system (100) comprising processing circuitry (110) is presented. The processing circuitry (110) is configured to disconnect an electrical motor (12) from a drive train (18) of a vehicle (10) and to control a stator current vector ($\bar{\iota}$) driving the electrical motor (12) to cause the electrical motor (12) to accelerate to a predetermined rotational speed (s*). The stator current ($\bar{\iota}$) indicating a stator current amplitude ($|\bar{\iota}|$) and stator current angle ($\theta_l$). The processing circuitry (110) is further configured to, responsive to the electrical motor (12) rotating at the predetermined rotational speed (s*), control the stator current angle ($\theta_l$) to maintain the predetermined rotational speed (s*) at a predetermined stator current amplitude ($|\bar{\iota}|^*$).

**FIG. 6**

EP 4 574 516 A1

**Description**

**TECHNICAL FIELD**

The disclosure relates generally to heating of a vehicle. In particular aspects, the disclosure relates to electrical heating systems. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

Heat and thermal management of vehicles has been a challenge for vehicle makers for a long time. On cold day, a temperature of the cabin should ideally be raised to a desired temperature as fast as possible, and lowered to the desired temperature on hot days. With electrical vehicles, heat and thermal management is an even greater challenge as electrical power sources (e.g. batteries, fuel cells etc.) may have degraded performance at some temperatures and even be damaged at some temperatures.

To this end, temperature and thermal management of vehicles in general, and electrical vehicles in particular, generally requires dedicated devices and arrangements increasing cost of the vehicle and a weight of the vehicle which increase energy required to propel the vehicle.

**SUMMARY**

According to a first aspect of the disclosure, a computer system comprising processing circuitry is presented. The processing circuitry is configured to disconnect an electrical motor from a drive train of a vehicle and control a stator current vector, indicating a stator current amplitude and stator current angle, driving the electrical motor to cause the electrical motor to accelerate to a predetermined rotational speed. The processing circuitry is further configured to, responsive to the electrical motor rotating at the predetermined rotational speed, control the stator current angle to maintain the predetermined rotational speed at a predetermined stator current amplitude. The first aspect of the disclosure may seek to reduce a cost of a vehicle and provide an alternative method of heating a vehicle at stand still. A technical benefit may include removal of e.g. electric or combustion based heaters and/or environmentally friendly and efficient heating of an electric vehicle also at stand still.

Optionally in some examples, including in at least one preferred example, the processing circuitry is further configured to determine the predetermined stator current amplitude based on a temperature of windings of the electrical motor. A technical benefit may include ensuring that the windings are heated to a suitable temperature, a too high temperature may damage the windings, and a too low temperature may cause inefficient heating of the electrical motor.

Optionally in some examples, including in at least one preferred example, the processing circuitry is further configured to determine the predetermined stator current amplitude to control the temperature of the windings to be at or above a first winding temperature limit of the electrical motor. A technical benefit may include ensuring that the windings are heated to a suitable temperature, a too high temperature may damage the windings, and a too low temperature may cause inefficient heating of the electrical motor.

Optionally in some examples, including in at least one preferred example, the processing circuitry is further configured to, responsive to the temperature of the windings not reaching a steady state at or above the first winding temperature limit, control the stator current vector to deaccelerate the electrical motor below the predetermined rotational speed until the temperature of the windings reaches a steady state at or above the first winding temperature limit. A technical benefit may include ensuring that the windings are heated to a suitably high temperature and an inefficient heating of the electrical motor is provided.

Optionally in some examples, including in at least one preferred example, the processing circuitry is further configured to determine the predetermined stator current amplitude to control the temperature of the windings to be at or below a second winding temperature limit of the electrical motor, the second winding temperature limit being below the first winding temperature limit. A technical benefit may include ensuring that the windings are heated to a suitable temperature, a too high temperature may damage the windings.

Optionally in some examples, including in at least one preferred example, the processing circuitry is further configured to during control of the stator current vector to accelerate the electrical motor, controlling the stator current amplitude to be at the predetermined stator current amplitude. A technical benefit may include providing efficient heating of the electrical motor during acceleration.

Optionally in some examples, including in at least one preferred example, the processing circuitry is further configured to determine the predetermined rotational speed to provide rotational losses by the electrical motor being above a speed loss threshold. A technical benefit may include utilization and consideration also of rotational losses during control of the electrical motor.

Optionally in some examples, including in at least one preferred example, the processing circuitry is further configured to determine the predetermined stator current amplitude based on a temperature of windings of the electrical motor; determine the predetermined stator current amplitude to control the temperature of the windings to be at or above a first winding temperature limit of the electrical motor; responsive to the temperature of the windings not reaching a steady state at or above the first winding temperature limit, control the stator current vector to deaccelerate the electrical motor below the predetermined rotational speed until the temperature of the windings reaches a steady state at or above the first winding temperature limit; during control of the stator current vector to accelerate the electrical motor, controlling the stator current amplitude to be at the predetermined stator current amplitude; and determine the predetermined rotational speed to provide rotational losses by the electrical motor being above a speed loss threshold; wherein the stator current vector comprises polar coordinates. A technical benefit may include, in addition to the ones mentioned above, enabling convenient control by e.g. P, PI or PID controller to provide load angle and current amplitude for the electrical motor.

According to a second aspect of the disclosure, a vehicle comprising a drive train, an electrical motor selectively coupled to the drive train and the computer system of the first aspect is presented. The second aspect of the disclosure may seek to provide a vehicle at a reduced cost and provide a vehicle with an alternative method of heating a vehicle at stand still. A technical benefit may include removal of e.g. electric or combustion based heaters and/or environmentally friendly and efficient heating of an electric vehicle also at stand still.

Optionally in some examples, including in at least one preferred example, the vehicle is a heavy duty vehicle.

According to third second aspect of the disclosure, a computer-implemented method is presented. The method comprises disconnecting, by processing circuitry of a computer system, an electrical motor from a drive train of a vehicle, controlling, by processing circuitry of the computer system, a stator current vector, comprising a stator current amplitude and stator current angle, driving the electrical motor to cause the electrical motor to accelerate to a predetermined rotational speed; and responsive to the electrical motor rotating at the predetermined rotational speed, controlling, by processing circuitry of the computer system, the stator current vector to maintain the predetermined rotational speed at a predetermined stator current amplitude. The third aspect of the disclosure may seek to reduce a cost of a vehicle and provide an alternative method of heating a vehicle at stand still. A technical benefit may include removal of e.g. electric or combustion based heaters and/or environmentally friendly and efficient heating of an electric vehicle also at stand still.

Optionally in some examples, including in at least one preferred example, the computer-implemented further comprises determining, by processing circuitry of the computer system, the predetermined stator current amplitude based on a temperature of windings of the electrical motor.

Optionally in some examples, including in at least one preferred example, the computer-implemented further comprises, during control of the stator current vector to accelerate the electrical motor, controlling, by processing circuitry of the computer system, the stator current amplitude to be at the predetermined stator current amplitude.

According to fourth second aspect of the disclosure, a computer program product is presented. The computer program product comprises program code for performing, when executed by processing circuitry, the method of the third aspect.

According to fourth second aspect of the disclosure, a non-transitory computer-readable storage medium is presented. The non-transitory computer-readable storage medium comprises instructions, which when executed by processing circuitry, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

FIG. 1 is an exemplary side view of a vehicle according to an example.
FIG. 2 is an exemplary block diagram of a computer system controlling a electrical motor and drive chain of a vehicle according to an example.
FIG. 3 is an exemplary cross-sectional side view of an electrical motor according to an example.
FIG. 4 is an exemplary dq-reference frame according to an example.
FIG. 5A is an exemplary block diagram of a temperature manager according to an example.
FIG. 5B is an exemplary block diagram of a temperature manager according to an example.
FIG. 6 is an exemplary block diagram of a computer system according to an example.
FIG. 7 is an exemplary block diagram of a method according to an example.
FIG. 8 is an exemplary block diagram of a computer program product according to an example.
FIG. 9 is a schematic diagram of an exemplary computer system for implementing examples disclosed herein, according to an example.

**DETAILED DESCRIPTION**

The detailed description set forth below provides information and examples of the disclosed technology with sufficient detail to enable those skilled in the art to practice the disclosure.

The present disclosure provides a method, system and apparatus that enables cost-effective heat generation in a vehicle, in particular an electrical vehicle. The cost-effective heat generation may allow for reduced utilization of e.g. onboard electrical heaters, potentially decreasing an energy consumption of the vehicle. The cost-effective heat generation may allow for removal of e.g. onboard electrical heaters, decreasing a cost of the vehicle, and potentially decreasing an energy consumption of the vehicle due to e.g. the reduced weight of the vehicle. The teachings of the present disclosure may be implemented in conjunction with other thermal management devices of the vehicle and may provide an alternative heat source for the vehicle.

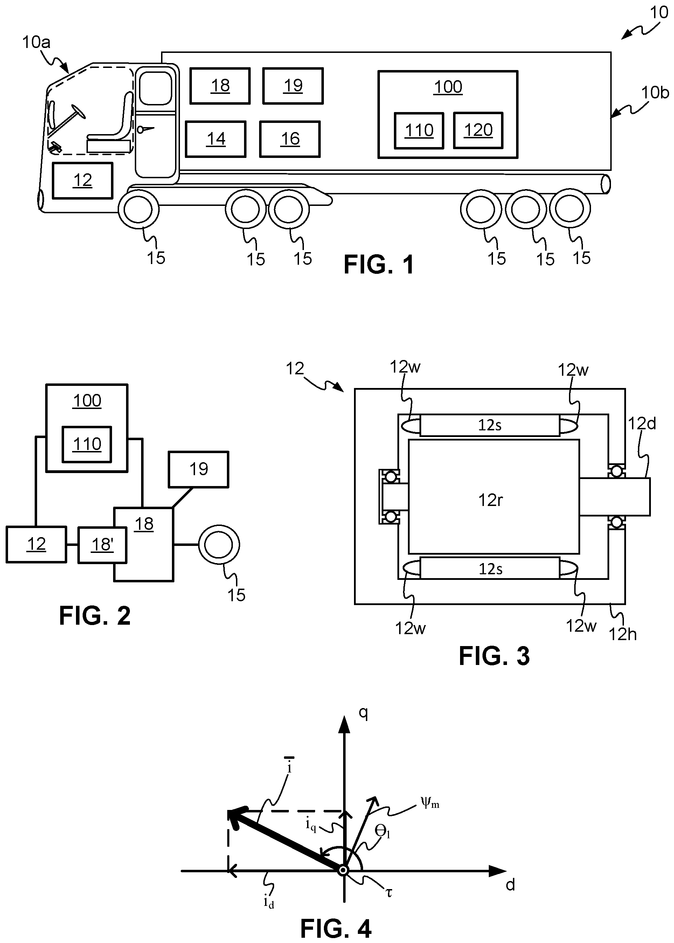

FIG. 1 is an exemplary schematic side view of a heavy-duty vehicle 10 (hereinafter referred to as vehicle 10). The vehicle 10 comprises a tractor unit 10a which is arranged to tow a trailer unit 10b. In other examples, other vehicles may be employed, e.g., trucks, buses, and construction equipment. The vehicle 10 comprises all vehicle units and associated functionality to operate as expected, such as a drive train 18, chassis, and various control systems. The vehicle 10 comprises one or more propulsion sources 12. The propulsion source 12 may be any suitable propulsion source 12 exemplified by, but not limited to, one or more or a combination of an electrical motor, a combustion engine such as a diesel, gas or gasoline powered engine. The propulsion source 12 is configured to transfer (mechanical) power to the drive train 18. The drive train 18 is configured to transfer power from the propulsion source 12 to one or more wheels 15 of the vehicle 10. The drive chain may comprise one or more transmissions, drive shafts, axles, differentials etc. The vehicle 10 further comprises an energy source 14 suitable for providing energy for the propulsion source 12. That is to say, if the propulsion source 12 is an electrical motor 12, a suitable energy source 14 would be a battery or a fuel cell. The vehicle 10 further comprises sensor circuitry 16 arranged to detect, measure, sense or otherwise obtain data relevant for operation of the vehicle 10. The sensor circuit 16 may comprise one or more of an accelerometer, a gyroscope, a wheel Speed Sensor, an ABS sensor, a throttle position sensor, a fuel level sensor, a temperature Sensor, a pressure sensor, a rain sensor, a light sensor, proximity sensor, a lane departure warning sensor, a blind spot detection sensor, a TPMS sensor, a current sensor, a rpm sensor etc. Operational data relevant for operation of the vehicle 10 may include, but is not limited to, one or more of a speed of the vehicle 10, a weight of the vehicle 10, an inclination of the vehicle 10, a status of the energy source 14 of the vehicle 10 (state of charge, fuel level etc.), a current speed limit of a current road travelled by the vehicle 10, etc.

The vehicle 10 in FIG. 1 further comprises a computer system 100. The computer system 100 may be operatively connected to, the drive train 18, the sensor circuitry 16, the energy source 14 and/or the propulsion source 12 of the vehicle 10. The computer system 100 comprises processing circuitry 110. The computer system 100 may comprise a storage device 120, advantageously a non-volatile storage device such as a hard disk drives (HDDs), solid-state drives (SSDs) etc. In some examples, the storage device 120 is operatively connected to the computer system 100.

Generally, a vehicle 10 comprise one or more heat generators configured to generate heat for e.g. heating an interior of the vehicle 10, the energy source 14 of the vehicle etc. these heat generators are generally specialized components for heating such as electrical heaters. However, in a vehicle with an electrical propulsion source 12, an electrical motor 12 for short, heat may be generated by the electrical motor 12 and associated control circuitry such as inverters etc. However, heat generation at stand still from the electrical motor 12 is challenging as the electrical motor 12 generally is required to rotate during heat generation in order to uniformly heat the electrical motor 12 and avoid over heating windings of the electrical motor 12. The vehicle 10 may comprise a heating system 19 configured to distribute heat in the vehicle 10. The heating system 19 may be a liquid heating system arranged to absorb heat from the electrical motor 12 and dissipate the heat at other components, areas or devices of the vehicle 10. The heating system 19 may comprise one or more fluid pumps configured to circulate the fluid in the heating system 19. The heating system 19 may comprise one or more heat exchangers arranged and configured to expedite heat exchange between the fluid of the heating system 19 and the vehicle. In some examples, the heating system 19 is configured to transfer heat from the electrical motor 12 to at least a compartment of the vehicle 10.

In FIG. 2, a block diagram of drive train 18 according to some examples is shown. The drive train 18 is connected between wheels 15 of the vehicle and the electrical motor(s) 12 of the vehicle 10. The computer system 100 is operatively connected to the electrical motor(s) 12 and the drive train 18. Specifically, the computer system 100 is operatively connected to cause control of a drive train disconnect 18' of the vehicle 10. The drive train disconnect 18' may be e.g. a clutch or any other device arranged to selectively connect the electrical motor 12 to the drive train 18. For the present disclosure, it should be understood that the drive train disconnect 18' may be arranged at any position between the electrical motor 12 and the drive train 18, or along the drive train 18.

By permitting the electrical motor 12 to be decoupled from the drive train 18, a controlled heat may be generated by the electrical motor 12 by controlling a current and a speed of the electrical motor 12. This allows the heat generated to be equally distributed in the electrical motor **12** and heat generation may be increased compared to situations where the vehicle **10** is propelled by the electrical motor **12** (i.e. not at standstill). During propulsion of the vehicle **10**, the speed may not be freely controlled to provide desired heat generation. The present disclosure presents enables the vehicle **10** to produce heat at stand still utilizing standard components of a motor drive system (MDS). Heat may be generated also at stand still without e.g. an electrical heater reducing the number of components of the vehicle **10** and a cost of the vehicle **10**. The heat generated by the electrical motor **12** with the motor disconnected from the drive train **18** may be controlled both with respect to heat generated by conductive losses electrical motor **12**, and heat generated by rotational losses of the electrical motor **12**. In order to reduce wear of windings, it is advantageous to utilize the rotational losses as much as possible and limit conductive losses of windings of the electrical motor **12**.

In **FIG. 3** a cross-sectional side view if an exemplary electrical motor **12** is shown. The electrical motor **12** comprises a stator **12s** arranged coaxial with a rotor **12r** of the electrical machine **12**. Groups of stator windings **12w**, or windings **12w** for short, are provided at sections of the stator **12s**. The rotor **12r** is connected to a drive shaft **12d** of the electrical machine **12**. The drive shaft **12d** will rotate with the rotor and is configured to transfer torque to the drive chain **18** of the vehicle **10**. The electrical machine **12** may be provided with a housing **12h** arranged to, at least party cover, the stator **12s** and the rotor **12r.**

An electrical motor **12** may be controlled by vector control. Vector control, see **FIG. 4**, sometimes referred to as field-oriented control (FOC), is a variable-frequency drive (VFD) control method in which complex stator currents of a three-phase electric electrical motor **12** are identified as two orthogonal components, a first component along a direct axis **d** and a second component along a quadrature axis **q.** The direct axis **d** and the quadrature axis **q** describe a rotating reference frame, sometimes referred to as a dq reference frame. The dq reference frame is a mathematical tool used to simplify the analysis and control of electrical machines, such as electric motors or generators. The dq reference frame is a coordinate system that rotates with the rotor of the electrical machine, with the direct axis **d** aligned with the magnetic field from the permanent magnets in the rotor, i.e. the magnetization field, and the quadrature axis **q** 90 degrees ahead of the direct axis **d.** By transforming the three-phase electrical quantities of the machine (i.e. with regards to voltage and current) from the stationary orthogonal frame to the rotating dq reference frame, it is possible to represent the behavior of the electrical machine, e.g. the electrical motor **12** as a set of two variables.

The direct axis **d** and the quadrature axis **q** components may represent any electrical or magnetic quantity (such as current, voltage, or magnetic flux) that changes in a three-phase system when the phases are shifted 120 degrees in space and time.

In **FIG. 4**, a stator current vector $\bar{\imath}$ is illustrated in the dq reference frame. The current vector $\bar{\imath}$ comprises a first current component $i_d$ along the direct axis **d** and a second current component $i_q$ along the quadrature axis **q**. A stator current load angle $\theta_I$ is formed between the current vector $\bar{\imath}$ and the to the direct axis **d.** A length of the current vector $\bar{\imath}$ may be described as a current amplitude $|\bar{\imath}|$. **FIG. 4** further shows a field flux linkage component $\psi_m$ describing a combination of a flux from permanent magnets of the electrical motor **12** and the current vector $\bar{\imath}$. A torque component $\tau$ formed as a cross product between the current vector $\bar{\imath}$ and the flux linkage component $\psi_m$.

Generally, to control an electrical motor **12**, a large current amplitude $|\bar{\imath}|$ provides a large torque which, in turn, accelerates the electrical motor **12** quickly if it is decoupled from the drive train **18**. However, by controlling the speed of the electrical motor **12** as well as the current vector $\bar{\imath}$ by control of the current amplitude $|\bar{\imath}|$ and the stator current load angle $\theta_I$ both the torque component $\tau$ and the losses of the electrical motor **12** may be controlled. As will be explained in following, the speed and the stator current in an electrical motor **12** may be controlled by controlling the current amplitude $|\bar{\imath}|$ and the stator current load angle $\theta_I$ of the stator current vector $\bar{\imath}$. Control of the current amplitude $|\bar{\imath}|$ and the stator current load angle $\theta_I$ will affect both the torque and the losses in the electrical motor **12**. Losses in windings **12w** of the electrical motor **12** are proportional to the square of a winding current (i.e. a current in the windings **12w** of the electrical motor **12**). Losses in an iron core of the electrical motor 12 will increase with the speed of the electrical motor **12**. Consequently, it is possible to increase the heat generation in the electrical motor **12** by increasing both the current amplitude $|\bar{\imath}|$ and the speed of the electrical motor **12**. As the electrical motor **12** may be disconnected from the drive train **18** by the drive train disconnect **18'**, the speed and the current amplitude $|\bar{\imath}|$ of the electrical motor **12** may be controlled freely. This makes it possible to maximize a heat generation from both winding and iron losses of the electrical motor **12**. Note that the speed of the electrical motor **12** is not only used to distribute the heat equally in the electrical motor **12**, the speed of the electrical motor **12** also takes a great part in the actual heat generation.

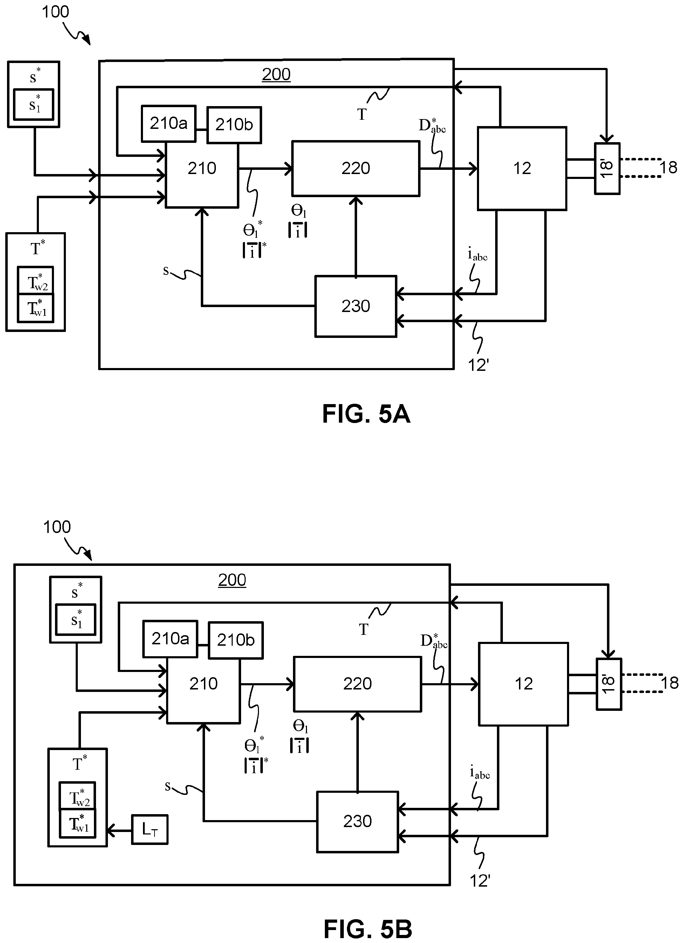

In **FIG. 5A** and **FIG. 5B**, a block diagrams of a temperature manager **200** according to an example is shown. The temperature manager **200** may form part of the computer system **100** previously introduced, and the functionalities of the temperature manager **200** may be provided by the processing circuitry **110** of the computer system **100**. In should be mentioned that the temperature managers **200** of **FIG. 5** and **FIG. 5B,** are specific examples and the detailed examples provided in the following are optional implementation examples.

The temperature manager **200** is operatively connected to the electrical motor **12** and may be configured to provide, or cause provisioning of, the current vector $\bar{\imath}$ for control of the electrical motor **12**. In **FIG. 5A** and **FIG. 5B**, the current vector $\bar{\imath}$ is formed by providing a wanted duty cycle duty cycle $D^*_{abc}$ for control of the electrical machine **12**. Generally, the wanted duty cycle $D^*_{abc}$ is provided to an inverter (not shown) to achieve a voltage that leads to a desired current vector $\bar{\imath}$. The wanted duty cycle $D^*_{abc}$ may be provided to an inverter of the electrical machine **12** or to further control circuitry (that may form part of the computer system **100**) for further processing before it is provided to the electrical motor **12**. The temperature manager **200** is further configured to control, or cause control of, the drive train disconnect **18'** to at least selectively disconnect the electrical motor **12** from the drive train **18**. The temperature manager **200** is configured to obtain a current speed s of the electrical motor **12** and current stator currents $i_{abc}$ (i.e. a current current vector $\bar{\imath}$ ) of the electrical motor **12**. The temperature manager **200** may be configured to obtain one or temperatures **T** of the electrical motor **12**. The temperatures **T** may comprise a temperature of the windings **12w** of the electrical machine **12**, a temperature of the housing **12h** of the electrical machine **12**, a temperature of the stator **12s** of the electrical machine **12** and/or a temperature of the rotor **12r** of the electrical machine **12**. The temperature(s) **T**, the current speed **s** and/or the current stator currents $i_{abc}$ may be obtained by e.g. the previously presented sensor circuitry **16**. The temperature manager **200** may further obtain further electrical motor data **12'** such as, but not limited to, a current position of the electrical motor **12**, a current speed **s** of the electrical motor **12** etc.

The temperature manager **200** comprises a controller **210** configured to determine a wanted stator load angle $\theta_l$* and a wanted current amplitude $\left|\bar{\imath}\right|^*$ for the electrical motor **12**. The wanted stator load angle $\theta_l$* and a wanted current amplitude $\left|\bar{\imath}\right|^*$ may be referred to as a predetermined stator load angle $\theta_l$* and a predetermined current amplitude $\left|\bar{\imath}\right|^*$. The controller **210** may be configured to determine the wanted stator load

angle $\theta_l$* and the wanted current amplitude $\left|\bar{\imath}\right|^*$ based on the temperature(s) **T** of the electrical motor **12** and the current speed **s** of the electrical motor **12**. In some examples, the controller **210** is configured to obtain a wanted speed s* and/or a predetermined temperature **T\*** and determine the wanted stator load angle $\theta_l$* and the wanted current amplitude $\left|\bar{\imath}\right|^*$ based on the wanted speed s* and/or the predetermined temperature **T\***. In some examples, see **FIG. 5B**, the temperature manager **200** may be configured to determine the wanted speed s* and/or the predetermined temperature **T\***. The controller **210** may comprise a first controller **210a** and a second controller **210b**. The first controller **210a** may be configured to determine the wanted stator load angle $\theta_l$* based on the speed s of the electrical machine **12** and optionally further based on the wanted rotational speed **s\*** of the electrical machine **12**. The wanted rotational speed s* may sometimes be referred to a wanted speed **s\*** for short, or predetermined rotational speed s*. The second controller **210b** may be configured to determine the wanted current amplitude $\left|\bar{\imath}\right|^*$ based on the temperature(s) **T** of the electrical motor **12** and optionally further based on the predetermined temperature **T\***. In some examples, the predetermined temperature **T\*** is a maximum allowable temperature. In some examples, the predetermined temperature **T\*** is a wanted temperature.

Generally, the controller **210** may be configured to control the stator current vector $\bar{\imath}$ to cause the electrical motor **12** to accelerate to the wanted rotational speed **s\***. Once the electrical motor **12** reaches the wanted speed **s\***, the controller **210** may be configured to control the current vector $\bar{\imath}$ to maintain the wanted speed s* at the predetermined stator current amplitude $\left|\bar{\imath}\right|^*$ by controlling the stator current angle $\theta_l$ at the predetermined stator current amplitude $\left|\bar{\imath}\right|^*$. In specific examples, the controller **210** may be configured to determine the predetermined stator current amplitude $\left|\bar{\imath}\right|^*$ based on a temperature **T** of windings **12w**. Optionally, during the acceleration of the electrical motor **12**, the controller **210** may be configured to control the stator current amplitude $\left|\bar{\imath}\right|$ to be at the predetermined stator current amplitude $\left|\bar{\imath}\right|^*$.

In some examples, the predetermined temperature **T\*** comprises a first winding temperature limit $T^*_{w1}$. In such examples, the controller **210** may be configured to control the temperature **T** of the windings **12w** to be at or above the first winding temperature limit

$T^*_{w1}$. That is to say, the controller **210** may be configured to determine the wanted stator load angle $\theta_l^*$ and the wanted current amplitude $|\bar{\imath}|^*$ further based on the first winding temperature limit $T^*_{w1}$. Generally, the controller **120** may be configured to control the temperature **T** of the windings **12w** to be at a steady state at the first winding temperature limit $T^*_{w1}$. In some examples, obtaining the a steady state of the temperature **T** of the windings **12w** at the first winding temperature limit $T^*_{w1}$ may comprise the controller **120** decreasing the wanted current amplitude $|\bar{\imath}|^*$ with a maintained wanted rotational speed **s\*** of the electrical motor **12**. Responsive to the steady state of the temperature **T** of the windings **12w** at the first winding temperature limit $T^*_{w1}$ being obtained, the controller **120** may be configured to maintain a current wanted current amplitude $|\bar{\imath}|^*$ and current wanted rotational speed **s\***, i.e. to stop decreasing the wanted current amplitude $|\bar{\imath}|^*$. In some examples, it may be that the temperature **T** of the windings **12w** will fail to reach the steady state at the first winding temperature limit $T^*_{w1}$ as the wanted current amplitude $|\bar{\imath}|^*$ decreases. This may be the case at low ambient temperatures, at high ambient temperatures or if there are limits pertaining to e.g. power drain from the energy source **14** etc. If the temperature **T** of the windings **12w** will fail to reach a steady state at the first winding temperature limit $T^*_{w1}$, the controller **210** may be configured to decrease the wanted speed **s\***. Responsive to the steady state of the temperature **T** of the windings **12w** at the first winding temperature limit $T^*_{w1}$ being obtained, the controller **120** may be configured to maintain a current wanted current amplitude $|\bar{\imath}|^*$ and current wanted rotational speed **s\***, i.e. to stop decreasing the wanted rotational speed **s\***. The decreased speed **s** of the electrical motor **12** will cause the temperature **T** of the windings **12w** to decrease. This will enable the temperature **T** of the windings **12w** to reach a steady state at or above the first winding temperature limit $T^*_{w1}$.

In other words, the controller **120** may be configured to first accelerate the electrical motor **12** until the windings **12w** reach the first winding temperature limit $T^*_{w1}$. Generally, this will occur if the electrical motor **12** is controlled with a maximum current amplitude at high rotational speeds. In order to decrease a risk that the electrical motor **12** is overheated, the current amplitude $|\bar{\imath}|$ may be decreased to not overheat the machine, but the rotational speed s is kept constant. If the first winding temperature limit $T^*_{w1}$ is still exceeded even as the current amplitude $|\bar{\imath}|$ decreases, the rotational speed s of the electrical machine **12** may be decreased.

By configuring the controller **120** to rapidly accelerate the electrical motor **12** to the wanted rotational speed **s\***, and thereafter reducing the current amplitude $|\bar{\imath}|$ of the windings **12w** with maintained rotational speed **s**, the heat generated by conductive losses is comparably low and the heat generated by rotational losses is comparably high. As mentioned, this decreases wear of the windings **12w** and a lifetime of the electrical machine **12** may be expanded. Details and specific examples of maintaining the rotational speed s will be further explained in coming sections of the present disclosure.

In some examples, the predetermined temperature comprises a second winding temperature limit $T^*_{w2}$. The second winding temperature limit $T^*_{w2}$ is below the first winding temperature limit $T^*_{w1}$. In such examples, the controller **210** may be configured to control the temperature **T** of the windings **12w** to be above the second winding temperature limit $T^*_{w2}$. That is to say, the controller **210** may be configured to determine the wanted stator load angle $\theta_l^*$ and the wanted current amplitude $|\bar{\imath}|^*$ further based on the second winding temperature limit $T^*_{w2}$. Generally, the controller **120** may be configured to control the temperature **T** of the windings **12w** to be at a steady state between the first winding temperature limit $T^*_{w1}$ and the second winding temperature limit $T^*_{w2}$. In some examples, it may be that the temperature **T** of the windings **12w** will fail to reach the steady state between the first winding temperature limit $T^*_{w1}$ and the second winding temperature

limit $T^*_{w2}$. This may be the case at low ambient temperatures, at high ambient temperatures or if there are limits pertaining to e.g. power drain from the energy source **14** etc. If the temperature **T** of the windings **12w** will fail to reach a steady state between the first winding temperature limit $T^*_{w1}$ and the second winding temperature limit $T^*_{w2}$, the controller **210** may decrease the wanted current amplitude $|\bar{\iota}|^*$ and/or the wanted speed **s***, as described above in reference to the first winding temperature limit $T^*_{w1}$.

Alternatively, in some examples, wherein the predetermined temperature **T*** comprises the second winding temperature limit $T^*_{w2}$, the controller **210** may be configured to control the temperature **T** of the windings **12w** to be at or below the second winding temperature limit $T^*_{w2}$, i.e. to control the temperature **T** of the windings **12w** to be strictly below a higher allowable temperature indicated by e.g. the first winding temperature limit $T^*_{w1}$. The controller **120** may be configured to control the temperature **T** of the windings **12w** to be at a steady state at or below the second winding temperature limit $T^*_{w2}$ analogues what is as above in reference to e.g. the first winding temperature limit $T^*_{w1}$.

The controller **210**, or the temperature manager **200** may be configured to determine the predetermined rotational speed **s*** to provide rotational losses from the electrical motor **12** that are above a speed loss threshold **L_T**.

In some examples, the first controller **210a** is a P controller. In some examples, the first controller **210a** is a PI controller. In some examples, the first controller **210a** is a PID controller. Correspondingly, in some examples, the second controller **210b** is a P controller. In some examples, the second controller **210b** is a PI controller. In some examples, the second controller **210b** is a PID controller. In examples wherein the first and second controllers **210a, 210b** are PI controllers, the wanted current amplitude $|\bar{\iota}|^*$ may be determined as

$$|i|^*_s = (T^* - T)(k_{p\delta} + \frac{k_{i\delta}}{L})$$

and the wanted stator load angle $\theta_l^*$ may be determined as

$$|\theta|^*_l = (s^* - s)(k_{pn} + \frac{k_{in}}{L})$$

. $k_{p\delta}$, $k_{i\delta}$, $k_{pn}$ and $k_{in}$ are the controller gains and L is the Laplace complex variable.

It should be mentioned that, in some examples, the first controller **210a** and/or the second controller **210b** may be configured to perform a hysteresis control to provide the references. That is to say, the wanted current amplitude $|\bar{\iota}|^*$ and/or the wanted stator load angle $\theta_l^*$ may be provided with reference to previous (historic) values of the current amplitude $|\bar{\iota}|$ and/or the stator current load angle $\theta_l$.

The temperature **T** may be temperature measurements from the hotspot of the windings **12w** in the electrical motor **12**. In some examples, the temperature **T** may be derived from a temperature signal from the inverter. The speed s may be provided in revolutions per minute (rpm). In some examples, the speed s is provided in e.g. angular frequency (rad/s) or frequency (Hz).

In some examples, the temperature manager **200** further comprises a modulator **220**. The modulator **220** may be configured to convert the wanted current amplitude $|\bar{\iota}|^*$ and the wanted current amplitude $|\bar{\iota}|^*$ to Cartesian coordinates (i.e. the dq-reference frame) enabling the previously presented FOC.

It should be mentioned that, in some examples, the controller **210** may be configured to process Cartesian coordinates directly. That is to say, rather than processing the current amplitude $|\bar{\iota}|$ and/or the stator current load angle $\theta_l$, the controller **210** may process a current component along the quadrature axis **q** and a current a current component along the direct axis **d** to control the current amplitude $|\bar{\iota}|$ and the speed s of the electrical machine **12**.

The temperature manager **200** may further comprise a data converter **230**. The data converter may be configured to obtain the current stator currents $i_{abc}$ and process the current stator currents $i_{abc}$ to determine the load angle $\theta_l$ and/or the current amplitude $|\bar{\iota}|$. Additionally, or alternatively, the data converter **230** may be configured to determine the current speed s of the electrical machine **12** based on e.g. current and previous positions of the electrical motor **12**.

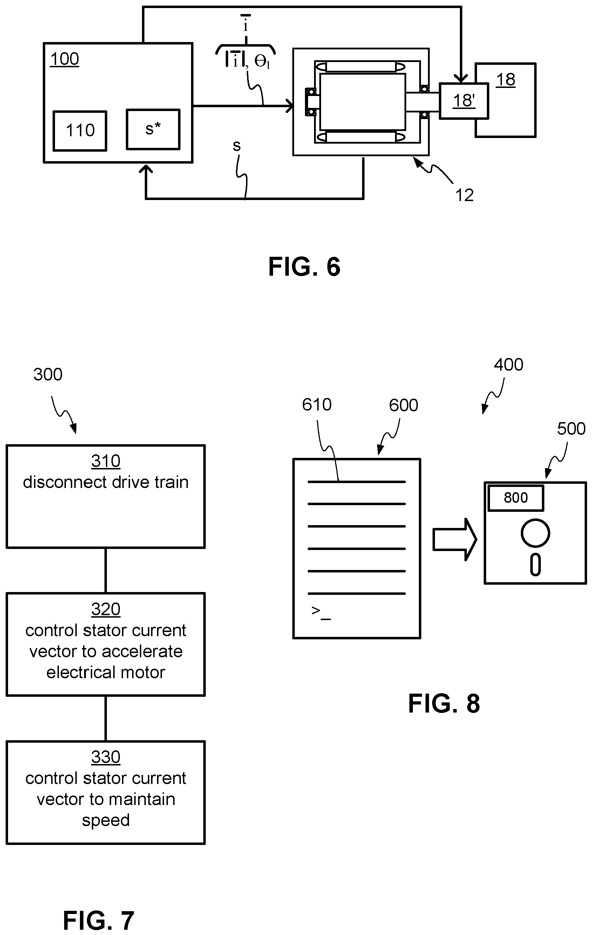

In FIG. 6, a block diagram of an exemplary computer system **100** is shown. The computer system **100** comprises processing circuitry **110** configured to disconnect the electrical motor **12** from the drive train **18** of the vehicle **10**. The processing circuitry **110** is further configured to control a stator current vector $\bar{\iota}$, indicating a stator current amplitude $|\bar{\iota}|$ and stator current angle $\theta_l$, driving the electrical motor **12** to cause the electrical motor **12** to accelerate to a predetermined rotational speed **s***. The processing circuitry **110** is further configured to, responsive to the electrical motor **12** rotating at the predetermined rotational speed s*,

control the stator current angle $\theta_I$ to maintain the predetermined rotational speed s* at a predetermined stator current amplitude $|\bar{\iota}|^*$ .

In **FIG. 7**, a block diagram of an exemplary method **300** is shown. The method **300** may be a computer implemented method. The computer system **100** presented herein, specifically the processing circuitry **110** of the computer system **100**, may be configured to perform the method **300**. The processing circuitry **110** of the computer system **100** may, in some examples, be configured to cause the performance of one, some or all features of the method **300**.

The method **300** comprises disconnecting **310** the electrical motor **12** from the drive train **18** of the vehicle **10**. The method **300** further comprises controlling **320** the stator current vector $\bar{\iota}$ to cause the electrical motor **12** to accelerate to a predetermined rotational speed **s***. The stator current vector $\bar{\iota}$ comprises the stator current amplitude $|\bar{\iota}|$ and the stator current angle $\theta_I$ driving the electrical motor **12**. The method **300** further comprises, responsive to the electrical motor **12** rotating at the predetermined rotational speed **s***, controlling **330** the stator current vector $\bar{\iota}$ to maintain the predetermined rotational speed **s*** at the predetermined stator current amplitude $|\bar{\iota}|^*$ .

The method **300** may be expanded and altered to comprise any feature, variant or example presented herein.

In **FIG. 8** a computer program product **400** is shown. The computer program product **400** comprises a computer program **600** and a non-transitory computer readable medium **500**. The computer program **600** may be stored on the computer readable medium **500**. The computer readable medium **500** is, in **FIG. 19**, exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program **600** comprises instruction **610** e.g. program instruction, software code, that, when executed by processing circuitry cause the processing circuitry to perform the method **300** introduced with reference to **FIG. 7**.

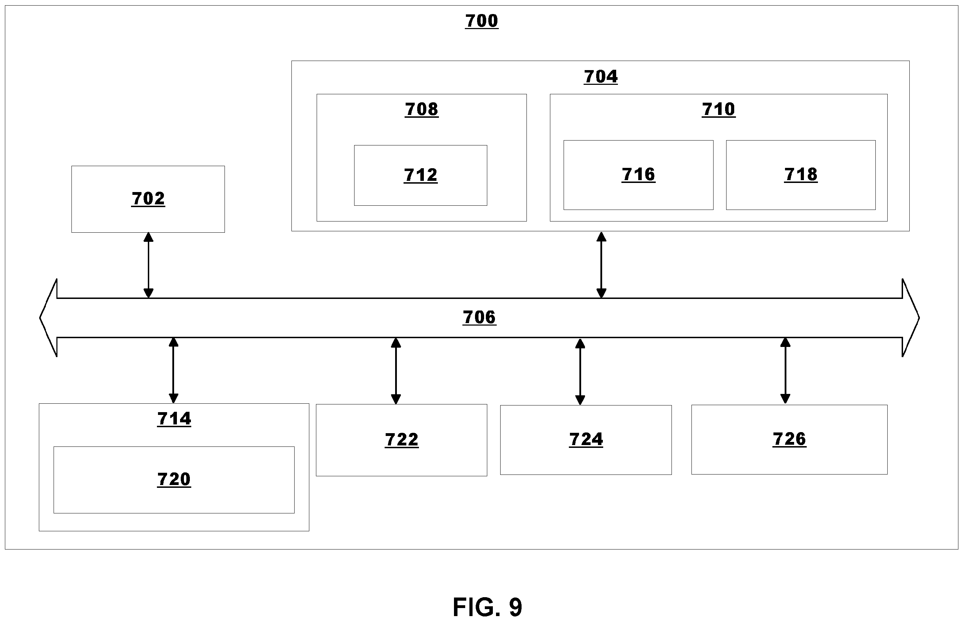

**FIG.** 9 is a schematic diagram of a computer system **700** for implementing examples disclosed herein. The computer system **700** is adapted to execute instructions from a computer-readable medium to perform these and/or any of the functions or processing described herein. The computer system **700** may be connected (e.g.,

networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704**, and a system bus **706**. The processing circuitry **702** of the computer system **700** may be the processing circuitry **110** of the computer system **100** previously presented. The computer system **700** may include at least one computing device having the processing circuitry **702**. The system bus **706** provides an interface for system components including, but not limited to, the memory **704** and the processing circuitry **702**. The processing circuitry **702** may include any number of hardware components for conducting data or signal processing or for executing computer code stored in memory **704**. The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., randomaccess memory (RAM)), or any other medium which can be used to carry or store desired program code in the form of machine-executable instructions or data structures and which can be accessed by a computer or other machine with processing circuitry **702**. A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710**, which may include an operating system **716** and/or one or more program modules **718**. All or a portion of the examples disclosed herein may be implemented as a computer program **720** stored on a transitory or non-transitory computer-usable or computer-readable storage medium (e.g., single medium or multiple media), such as the storage device **714**, which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702**. In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702**. The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device

interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system **100** comprising processing circuitry **110** configured to disconnect an electrical motor **12** from a drive train **18** of a vehicle **10**; control a stator current vector $\overline{\iota}$, indicating a stator current amplitude $|\overline{\iota}|$ and stator current angle $\theta_I$, driving the electrical motor **12** to cause the electrical motor **12** to accelerate to a predetermined rotational speed **s\***; and responsive to the electrical motor **12** rotating at the predetermined rotational speed **s\***, control the stator current angle $\theta_I$ to maintain the predetermined rotational speed **s\*** at a predetermined stator current amplitude $|\overline{\iota}|^*$.

Example 2. The computer system **100** of example 1, wherein the processing circuitry **110** is further configured to: determine the predetermined stator cur-

rent amplitude $\left|\bar{\imath}\right|^*$ based on a temperature **T** of windings **12w** of the electrical motor **12**.

Example 3. The computer system **100** of example 2, wherein the processing circuitry **110** is further configured to: determine the predetermined stator current amplitude $\left|\bar{\imath}\right|^*$ to control the temperature **T** of the windings **12w** to be at or above a first winding temperature limit $T_{w1}^*$ of the electrical motor **12**.

Example 4. The computer system **100** of example 3, wherein the processing circuitry **110** is further configured to: responsive to the temperature **T** of the windings **12w** not reaching a steady state at or above the first winding temperature limit $T_{w1}^*$, control the stator current vector $\bar{\imath}$ to deaccelerate the electrical motor **12** below the predetermined rotational speed s* until the temperature **T** of the windings **12w** reaches a steady state at or above the first winding temperature limit $T_{w1}^*$.

Example 5. The computer system **100** of example 2, wherein the processing circuitry **110** is further configured to: determine the predetermined stator current amplitude $\left|\bar{\imath}\right|^*$ to control the temperature **T** of the windings **12w** to be at or below a second winding temperature limit $T_{w2}^*$ of the electrical motor **12**, the second winding temperature limit $T_{w2}^*$ being below the first winding temperature limit $T_{w1}^*$.

Example 6. The computer system **100** of any one of examples 2 to 5, wherein the processing circuitry **110** is further configured to: during control of the stator current vector $\bar{\imath}$ to accelerate the electrical motor **12**, controlling the stator current amplitude $\left|\bar{\imath}\right|$ to be at the predetermined stator current amplitude $\left|\bar{\imath}\right|^*$.

Example 7. The computer system **100** of any one of examples 1 to 6, wherein the processing circuitry **110** is further configured to: determine the predetermined rotational speed s* to provide rotational losses by the electrical motor **12** being above a speed loss threshold $L_T$.

Example 8. The computer system **100** of any one of examples 1 to 7, wherein the processing circuitry **110** is further configured to: control a clutch **18'** of the vehicle 10 to disconnect the electrical motor **12** from the drive train **18**.

Example 9. The computer system **100** of any one of examples 1 to 8, wherein the stator current vector

$\bar{\imath}$ comprises polar coordinates.

Example 10. The computer system **100** of any one of examples 1 to 8, wherein the stator current vector $\bar{\imath}$ comprises Cartesian coordinates.

Example 11. The computer system **100** of any one of examples 2 to 10, wherein the processing circuitry **110** is further configured to: determine the predetermined stator current amplitude $\left|\bar{\imath}\right|^*$ based on a temperature **T** of windings **12w** of the electrical motor **12**; determine the predetermined stator current amplitude $\left|\bar{\imath}\right|^*$ to control the temperature **T** of the windings **12w** to be at or above a first winding temperature limit $T_{w1}^*$ of the electrical motor **12**; determine the predetermined stator current amplitude $\left|\bar{\imath}\right|^*$ to control the temperature **T** of the windings **12w** to be at or above a first winding temperature limit $T_{w1}^*$ of the electrical motor **12**; responsive to the temperature **T** of the windings **12w** not reaching a steady state at or above the first winding temperature limit $T_{w1}^*$, control the stator current vector $\bar{\imath}$ to deaccelerate the electrical motor **12** below the predetermined rotational speed **s*** until the temperature **T** of the windings **12w** reaches a steady state at or above the first winding temperature limit $T_{w1}^*$; during control of the stator current vector $\bar{\imath}$ to accelerate the electrical motor **12**, controlling the stator current amplitude $\left|\bar{\imath}\right|$ to be at the predetermined stator current amplitude $\left|\bar{\imath}\right|^*$; determine the predetermined rotational speed **s*** to provide rotational losses by the electrical motor **12** being above a speed loss threshold $L_T$; control a clutch **18'** of the vehicle 10 to disconnect the electrical motor **12** from the drive train **18**; wherein the stator current vector $\bar{\imath}$ comprises polar coordinates.

Example 12. A vehicle **10** comprising a drive train **18**, an electrical motor **12** selectively coupled to the drive train **18** and the computer system **100** of any one of examples 1 to 11.

Example 13. The vehicle **10** of example 12, further comprising a heating system **19** thermally connected to the electrical motor **12**.

Example 14. The vehicle **10** of example 12 or 13, wherein the vehicle **10** is a heavy duty vehicle **10**.

Example 15. A computer-implemented method **300**, comprising: disconnecting **310**, by processing circuitry **110** of a computer system **100**, an electrical motor **12** from a drive train **18** of a vehicle **10**; controlling **320**, by processing circuitry **110** of the computer system **100**, a

stator current vector $\bar{\iota}$, comprising a stator current amplitude $|\bar{\iota}|$ and stator current angle $\theta_I$, driving the electrical motor **12** to cause the electrical motor **12** to accelerate to a predetermined rotational speed **s\***; and responsive to the electrical motor **12** rotating at the predetermined rotational speed s\*, controlling **330**, by processing circuitry **110** of the computer system **100**, the stator current vector $\bar{\iota}$ to maintain the predetermined rotational speed s\* at a predetermined stator current amplitude $|\bar{\iota}|^*$.

Example 16. The computer-implemented method **300** of example 15, further comprising: determining, by processing circuitry **110** of the computer system **100**, the predetermined stator current amplitude $|\bar{\iota}|^*$ based on a temperature **T** of windings **12w** of the electrical motor **12**.

Example 17. The computer-implemented method **300** of example 16, further comprising: during control of the stator current vector $\bar{\iota}$ to accelerate the electrical motor **12**, controlling, by processing circuitry **110** of the computer system **100**, the stator current amplitude $|\bar{\iota}|$ to be at the predetermined stator current amplitude $|\bar{\iota}|^*$.

Example 18. The computer-implemented method **300** of any one of examples 15 to 17, further comprising: determining, by processing circuitry **110** of the computer system **100**, the predetermined rotational speed s\* to provide rotational losses by the electrical motor **12** being above a speed loss threshold $\mathbf{L_P}$.

Example 19. A computer program product **400** comprising program code **610** for performing, when executed by processing circuitry **110**, the method **300** of any of examples 15 to 18.

Example 20. A non-transitory computer-readable storage medium **500** comprising instructions **610**, which when executed by processing circuitry **110**, cause the processing circuitry **110** to perform the method **300** of any of examples 15 to 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (100) comprising processing circuitry (110) configured to:

   disconnect an electrical motor (12) from a drive train (18) of a vehicle (10);

   control a stator current vector ($\bar{\iota}$), indicating a stator current amplitude ($|\bar{\iota}|$) and stator current angle ($\theta_I$), driving the electrical motor (12) to cause the electrical motor (12) to accelerate to a predetermined rotational speed (s\*); and

responsive to the electrical motor (12) rotating at the predetermined rotational speed (s*), control the stator current angle ($\theta_I$) to maintain the predetermined rotational speed (s*) at a predetermined stator current amplitude ( $|\bar{\iota}|^*$ ).

2. The computer system (100) of claim 1, wherein the processing circuitry (110) is further configured to:
determine the predetermined stator current amplitude ( $|\bar{\iota}|^*$ ) based on a temperature (T) of windings (12w) of the electrical motor (12).

3. The computer system (100) of claim 2, wherein the processing circuitry (110) is further configured to:
determine the predetermined stator current amplitude ( $|\bar{\iota}|^*$ ) to control the temperature (T) of the windings (12w) to be at or above a first winding temperature limit ( $T_{w1}^*$ ) of the electrical motor (12).

4. The computer system (100) of claim 3, wherein the processing circuitry (110) is further configured to:
responsive to the temperature (T) of the windings (12w) not reaching a steady state at or above the first winding temperature limit ( $T_{w1}^*$ ), control the stator current vector ( $\bar{\iota}$ ) to deaccelerate the electrical motor (12) below the predetermined rotational speed (s*) until the temperature (T) of the windings (12w) reaches a steady state at or above the first winding temperature limit ( $T_{w1}^*$ ).

5. The computer system (100) of claim 2, wherein the processing circuitry (110) is further configured to:
determine the predetermined stator current amplitude ( $|\bar{\iota}|^*$ ) to control the temperature (T) of the windings (12w) to be at or below a second winding temperature limit ( $T_{w2}^*$ ) of the electrical motor (12), the second winding temperature limit ( $T_{w2}^*$ ) being below a first winding temperature limit ( $T_{w1}^*$ ).

6. The computer system (100) of any one of claims 2 to 5, wherein the processing circuitry (110) is further configured to:
during control of the stator current vector ( $\bar{\iota}$ ) to accelerate the electrical motor (12), controlling the stator current amplitude ( $|\bar{\iota}|$ ) to be at the predetermined stator current amplitude ( $|\bar{\iota}|^*$ ).

7. The computer system (100) of any one of claims 1 to 6, wherein the processing circuitry (110) is further configured to:
determine the predetermined rotational speed (s*) to provide rotational losses by the electrical motor (12) being above a speed loss threshold ($L_T$).

8. The computer system (100) of claim 1, wherein the processing circuitry (110) is further configured to:

determine the predetermined stator current amplitude ( $|\bar{\iota}|^*$ ) based on a temperature (T) of windings (12w) of the electrical motor (12);
determine the predetermined stator current amplitude ( $|\bar{\iota}|^*$ ) to control the temperature (T) of the windings (12w) to be at or above a first winding temperature limit ( $T_{w1}^*$ ) of the electrical motor (12)
responsive to the temperature (T) of the windings (12w) not reaching a steady state at or above the first winding temperature limit ( $T_{w1}^*$ ), control the stator current vector ( $\bar{\iota}$ ) to deaccelerate the electrical motor (12) below the predetermined rotational speed (s*) until the temperature (T) of the windings (12w) reaches a steady state at or above the first winding temperature limit ( $T_{w1}^*$ );

during control of the stator current vector ( $\vec{\iota}$ ) to accelerate the electrical motor (12), controlling the stator current amplitude ( $|\bar{\iota}|$ ) to be at the predetermined stator current amplitude ( $|\bar{\iota}|^*$ ); and
determine the predetermined rotational speed (s*) to provide rotational losses by the electrical motor (12) being above a speed loss threshold ($L_T$);

wherein the stator current vector ( $\vec{\iota}$ ) comprises polar coordinates.

9. A vehicle (10) comprising a drive train (18), an electrical motor (12) selectively coupled to the drive train (18) and the computer system (100) of any one of claims 1 to 8.

10. The vehicle (10) of claim 9, wherein the vehicle (10) is a heavy duty vehicle (10).

11. A computer-implemented method (300), comprising:

disconnecting (310), by processing circuitry (110) of a computer system (100), an electrical motor (12) from a drive train (18) of a vehicle (10);

controlling (320), by processing circuitry (110) of the computer system (100), a stator current vector ( $\hat{\overline{\iota}}$ ), comprising a stator current amplitude ( $|\overline{\iota}|$ ) and stator current angle ($\theta_I$), driving the electrical motor (12) to cause the electrical motor (12) to accelerate to a predetermined rotational speed (s*); and

responsive to the electrical motor (12) rotating at the predetermined rotational speed (s*), controlling (330), by processing circuitry (110) of the computer system (100), the stator current vector ( $\overline{\iota}$ ) to maintain the predetermined rotational speed (s*) at a predetermined stator current amplitude ( $|\overline{\iota}|^*$ ).

12. The computer-implemented method (300) of claim 11, further comprising:

determining, by processing circuitry (110) of the computer system (100), the predetermined stator current amplitude ( $|\overline{\iota}|^*$ ) based on a temperature (T) of windings (12w) of the electrical motor (12).

13. The computer-implemented method (300) of claim 12, further comprising:

during control of the stator current vector ( $\overline{\iota}$ ) to accelerate the electrical motor (12), controlling, by processing circuitry (110) of the computer system (100), the stator current amplitude ( $|\overline{\iota}|$ ) to be at the predetermined stator current amplitude ( $|\overline{\iota}|^*$ ).

14. A computer program product (400) comprising program code (610) for performing, when executed by processing circuitry (110), the method (300) of any of claims 11 to 13.

15. A non-transitory computer-readable storage medium (500) comprising instructions (610), which when executed by processing circuitry (110), cause the processing circuitry (110) to perform the method (300) of any of claims 11 to 13.

**FIG. 1**

**FIG. 2**

**FIG. 3**

**FIG. 4**

**FIG. 5A**

**FIG. 5B**

$\bar{i}$

$\widehat{|\bar{i}|, \Theta_1}$

100

110    s*

s

18'    18

12

**FIG. 6**

300

310
disconnect drive train

320
control stator current
vector to accelerate
electrical motor

330
control stator current
vector to maintain
speed

**FIG. 7**

610    600    400

500

800

0

**FIG. 8**

FIG. 9

# EP 4 574 516 A1

Europäisches
Patentamt

European
Patent Office

Office européen
des brevets

## EUROPEAN SEARCH REPORT

**Application Number**

**EP 23 21 7476**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/174039 A1 (SCHEDEL FELIX [DE] ET AL) 22 June 2017 (2017-06-22) * paragraphs [0023], [0029], [0040], [0050], [0053] – [0056], [0062]; figures 1,2 * | 1–15 | INV. B60L1/02 B60L15/02 B60L15/20 |
| A | US 2010/308759 A1 (HOHN HARRY [DE] ET AL) 9 December 2010 (2010-12-09) * paragraphs [0025], [0050], [0055]; figures 2a-3c * | 8 | |

**TECHNICAL FIELDS SEARCHED        (IPC)**

**B60L**

The present search report has been drawn up for all claims

| Place of search | Date of completion of the search | Examiner |
|---|---|---|
| The Hague | 1 May 2024 | Bro ski, Bart omiej |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................

& : member of the same patent family, corresponding
    document

EPO FORM 1503 03.82 (P04C01)

# EP 4 574 516 A1

## ANNEX TO THE EUROPEAN SEARCH REPORT
## ON EUROPEAN PATENT APPLICATION NO.

EP 23 21 7476

01-05-2024

| Patent document cited in search report | Publication date | Patent family member(s) | Publication date |
|---|---|---|---|
| US 2017174039 A1 | 22-06-2017 | CN 106536259 A | 22-03-2017 |
| | | DE 102014217959 A1 | 10-03-2016 |
| | | EP 3192167 A1 | 19-07-2017 |
| | | US 2017174039 A1 | 22-06-2017 |
| | | WO 2016037827 A1 | 17-03-2016 |
| US 2010308759 A1 | 09-12-2010 | CA 2700913 A1 | 09-04-2009 |
| | | DE 102007046289 A1 | 02-04-2009 |
| | | EP 2201672 A2 | 30-06-2010 |
| | | ES 2404039 T3 | 23-05-2013 |
| | | TW 200929842 A | 01-07-2009 |
| | | US 2010308759 A1 | 09-12-2010 |
| | | WO 2009043556 A2 | 09-04-2009 |